# EUROPEAN PATENT APPLICATION

(11) **EP 4 564 945 A1**
(43) Date of publication of application: **04.06.2025**
(21) Application number: 23845410.2
(22) Date of filing: 19.07.2023
(51) Int. Cl.: H04W 64/00

(54) **INFORMATION TRANSMISSION METHOD AND APPARATUS, AND STORAGE MEDIUM**

(30) Priority: 27.07.2022 CN 202210896088
(71) Applicant: Datang Mobile Communications Equipment Co., Ltd., Beijing 100085 (CN)
(72) Inventor: SUN, Jiancheng, Beijing 100085 (CN); LI, Jianxiang, Beijing 100085 (CN); JIA, Yinan, Beijing 100085 (CN); ZHANG, Huiying, Beijing 100085 (CN)
(74) Representative: Cabinet Nony
(86) International application number: PCT/CN2023/108179
(87) International publication number: WO 2024/022199

(57) **Abstract**

Provided in the embodiments of the present disclosure are an information transmission method and apparatus, and a storage medium. The method comprises: a serving base station receiving first information sent by an anchor base station, wherein the first information is sent by the anchor base station to the serving base station after the anchor base station receives second information sent by an LMF network element, the first information is used for requesting reference-signal resource allocation for a UE and performing anchor transfer, and the second information is used for requesting SRS resource allocation for the UE.

## Description

### CROSS-REFERENCES TO RELATED APPLICATIONS

The present application claims priority to Chinese patent application No. 2022108960884 filed on July 27, 2022, entitled "Information Transmission Method and Apparatus, and Storage Medium", which is hereby incorporated by reference in its entirety.

### FIELD

The present application relates to the field of communications, and in particular, to methods and apparatuses for information transmission, and storage media.

### BACKGROUND

In the radio resource control (RRC) inactive (RRC_inactive) state, small data transmission (SDT) may be used to transmit uplink (UL)/downlink (DL) signaling for terminal/user equipment (UE). UE in RRC_inactive state may be within the coverage range of an anchor point base station or within the coverage range of a non-anchor point base station (serving base station).

In case that the UE is in RRC_inactive state and within the coverage range of a non-anchor point base station (serving base station), if a location management function (LMF) triggers a UL positioning procedure, as the LMF and an access and mobility management function (AMF) do not know that the UE is in RRC_inactive state or the serving base station to which the UE belongs, therefore, the LMF only transmits a sounding reference signal (SRS) resource allocation request to the anchor point base station, and the anchor point base station cannot allocate SRS resources, which results in uplink positioning failure.

### BRIEF SUMMARY

Embodiments of the present application provide methods and apparatuses for information transmission, and storage media to solve a technical problem of uplink positioning failure in the related art.

An embodiment of the present application provides a method for information transmission, performed by a serving base station, including:
receiving first information transmitted from an anchor point base station; the first information is transmitted from the anchor point base station to the serving base station after receiving second information transmitted from a location management function (LMF); the first information is used for requesting reference signal resource allocation for user equipment (UE) and performing anchor point relocation; and the second information is used for requesting sounding reference signal (SRS) resource allocation for the UE.

In some embodiments, the first information includes one or more types of the following information:
context information of the UE;
SRS characteristic information; or
routing information of the LMF.

In some embodiments, after receiving the first information transmitted from the anchor point base station, the method further includes:
allocating reference signal resources; and
transmitting a positioning information response message to the LMF; the positioning information response message includes information of the reference signal resources allocated by the serving base station.

In some embodiments, after transmitting the positioning information response message to the LMF, the method further includes:
receiving a positioning measurement request message transmitted from the LMF;
transmitting a radio resource control (RRC) release message to the UE; the RRC release message includes the information of the reference signal resources allocated by the serving base station;
receiving a reference signal transmitted from the UE, and measuring the reference signal to obtain a measurement result; the reference signal is transmitted from the UE based on the reference signal resources allocated by the serving base station; and
transmitting the measurement result to the LMF.

In some embodiments, transmitting the positioning information response message to the LMF includes:
transmitting the positioning information response message to the LMF based on the routing information of the LMF.

In some embodiments, after receiving the first information transmitted from the anchor point base station, the method further includes:
transmitting a path switch request message to an access and mobility management function (AMF); and
receiving a path switch acknowledge message transmitted from the AMF.

An embodiment of the present application provides a method for information transmission, performed by an anchor point base station, including:
receiving second information transmitted from a location management function (LMF); the second information is used for requesting sounding reference signal (SRS) resource allocation for user equipment (UE); and
transmitting first information to a serving base station; the first information is used for requesting reference signal resource allocation for the UE and performing anchor point relocation.

In some embodiments, the first information includes one or more types of the following information:
context information of the UE;
SRS characteristic information; or
routing information of the LMF.

An embodiment of the present application provides a serving base station, including a memory, a transceiver, and a processor, where
the memory is used for storing a computer program; the transceiver is used for receiving and transmitting data under control of the processor; and the processor is used for reading the computer program in the memory and performing the following operations:
receiving first information transmitted from an anchor point base station; the first information is transmitted from the anchor point base station to the serving base station after receiving second information transmitted from a location management function (LMF); the first information is used for requesting reference signal resource allocation for user equipment (UE) and performing anchor point relocation; and the second information is used for requesting sounding reference signal (SRS) resource allocation for the UE.

In some embodiments, the first information includes one or more types of the following information:
context information of the UE;
SRS characteristic information; or
routing information of the LMF.

In some embodiments, after receiving the first information transmitted from the anchor point base station, the operations further include:
allocating reference signal resources; and
transmitting a positioning information response message to the LMF; the positioning information response message includes information of the reference signal resources allocated by the serving base station.

In some embodiments, after transmitting the positioning information response message to the LMF, the operations further include:
receiving a positioning measurement request message transmitted from the LMF;
transmitting a radio resource control (RRC) release message to the UE; the RRC release message includes the information of the reference signal resources allocated by the serving base station;
receiving a reference signal transmitted from the UE, and measuring the reference signal to obtain a measurement result; the reference signal is transmitted from the UE based on the reference signal resources allocated by the serving base station; and
transmitting the measurement result to the LMF.

In some embodiments, transmitting the positioning information response message to the LMF includes:
transmitting the positioning information response message to the LMF based on the routing information of the LMF.

In some embodiments, after receiving the first information transmitted from the anchor point base station, the operations further include:
transmitting a path switch request message to an access and mobility management function (AMF); and
receiving a path switch acknowledge message transmitted from the AMF.

An embodiment of the present application provides an anchor point base station, including a memory, a transceiver, and a processor, where
the memory is used for storing a computer program; the transceiver is used for receiving and transmitting data under control of the processor; and the processor is used for reading the computer program in the memory and performing the following operations:
receiving second information transmitted from a location management function (LMF); the second information is used for requesting sounding reference signal (SRS) resource allocation for user equipment (UE); and
transmitting first information to a serving base station; the first information is used for requesting reference signal resource allocation for the UE and performing anchor point relocation.

In some embodiments, the first information includes one or more types of the following information:
context information of the UE;
SRS characteristic information; or
routing information of the LMF.

An embodiment of the present application provides an apparatus for information transmission, including:
a first receiving module, used for receiving first information transmitted from an anchor point base station; the first information is transmitted from the anchor point base station to a serving base station after receiving second information transmitted from a location management function (LMF); the first information is used for requesting reference signal resource allocation for user equipment (UE) and performing anchor point relocation; and the second information is used for requesting sounding reference signal (SRS) resource allocation for the UE.

In some embodiments, the first information includes one or more types of the following information:
context information of the UE;
SRS characteristic information; or
routing information of the LMF.

In some embodiments, the apparatus further includes an allocating module and a second transmitting module;
the allocating module is used for allocating reference signal resources; and
the second transmitting module is used for transmitting a positioning information response message to the LMF; the positioning information response message includes information of the reference signal resources allocated by the serving base station.

In some embodiments, the apparatus further includes a third receiving module, a third transmitting module, a fourth receiving module, and a fourth transmitting module;
the third receiving module is used for receiving a positioning measurement request message transmitted from the LMF;
the third transmitting module is used for transmitting a radio resource control (RRC) release message to the UE; the RRC release message includes the information of the reference signal resources allocated by the serving base station;
the fourth receiving module is used for receiving a reference signal transmitted from the UE, and measuring the reference signal to obtain a measurement result; the reference signal is transmitted from the UE based on the reference signal resources allocated by the serving base station; and
the fourth transmitting module is used for transmitting the measurement result to the LMF.

In some embodiments, the second transmitting module is used for transmitting the positioning information response message to the LMF based on the routing information of the LMF.

In some embodiments, the apparatus further includes a fifth transmitting module and a fifth receiving module;
the fifth transmitting module is used for transmitting a path switch request message to an access and mobility management function (AMF); and
the fifth receiving module is used for receiving a path switch acknowledge message transmitted from the AMF.

An embodiment of the present application provides an apparatus for information transmission, including:
a second receiving module, used for receiving second information transmitted from a location management function (LMF); the second information is used for requesting sounding reference signal (SRS) resource allocation for user equipment (UE); and
a first transmitting module, used for transmitting first information to a serving base station; the first information is used for requesting reference signal resource allocation for the UE and performing anchor point relocation.

In some embodiments, the first information includes one or more types of the following information:
context information of the UE;
SRS characteristic information; or
routing information of the LMF.

An embodiment of the present application provides a processor-readable storage medium, where the processor-readable storage medium stores a computer program for causing a processor to perform the method for information transmission as described above.

An embodiment of the present application provides a computer-readable storage medium, where the computer-readable storage medium stores a computer program for causing a computer to perform the method for information transmission as described above.

An embodiment of the present application provides a communication device-readable storage medium, where the communication device-readable storage medium stores a computer program for causing a communication device to perform the method for information transmission as described above.

An embodiment of the present application provides a chip product-readable storage medium, where the chip product-readable storage medium stores a computer program for causing a chip product to perform the method for information transmission as described above.

In the methods and apparatuses for information transmission, and the storage media provided by the embodiments of the present application, the anchor point base station requests SRS resource allocation from the serving base station and performs anchor point relocation after receiving the SRS resource allocation request transmitted from the LMF, which realizes an uplink positioning associated new radio positioning protocol A (NRPPa) and air interface procedures.

### BRIEF DESCRIPTION OF THE DRAWINGS

To illustrate solutions in the embodiments of the present application or the related art more clearly, the drawings used in the descriptions of the embodiments or the related art are briefly described below. The drawings in the following description are some embodiments of the present application, and other drawings may be obtained based on these drawings without any creative work for those skilled in the art.
FIG. 1 is a schematic diagram of a transition relationship between RRC states;
FIG. 2 is a schematic flowchart of small data transmission (SDT) without anchor point relocation;
FIG. 3 is a schematic flowchart of SDT with anchor point relocation;
FIG. 4 is a schematic flowchart of a deferred 5th generation mobile communication core mobile terminated location request (5GC-MT-LR) positioning for user equipment (UE) in RRC_inactive state;
FIG. 5 is a first schematic flowchart of a method for information transmission according to an embodiment of the present application;
FIG. 6 is a schematic flowchart of uplink positioning with anchor point relocation according to an embodiment of the present application;
FIG. 7 is a second schematic flowchart of a method for information transmission according to an embodiment of the present application;
FIG. 8 is a schematic structural diagram of a serving base station according to an embodiment of the present application;
FIG. 9 is a schematic structural diagram of an anchor point base station according to an embodiment of the present application;
FIG. 10 is a first schematic structural diagram of an apparatus for information transmission according to an embodiment of the present application; and
FIG. 11 is a second schematic structural diagram of an apparatus for information transmission according to an embodiment of the present application.

### DETAILED DESCRIPTION

In a long term evolution (LTE) system, an access layer has only two states: RRC_idle and RRC_connected. In the 5th generation mobile communication (5G) new radio (NR), in addition to the two states of LTE, a third state is also introduced: RRC_inactive state.

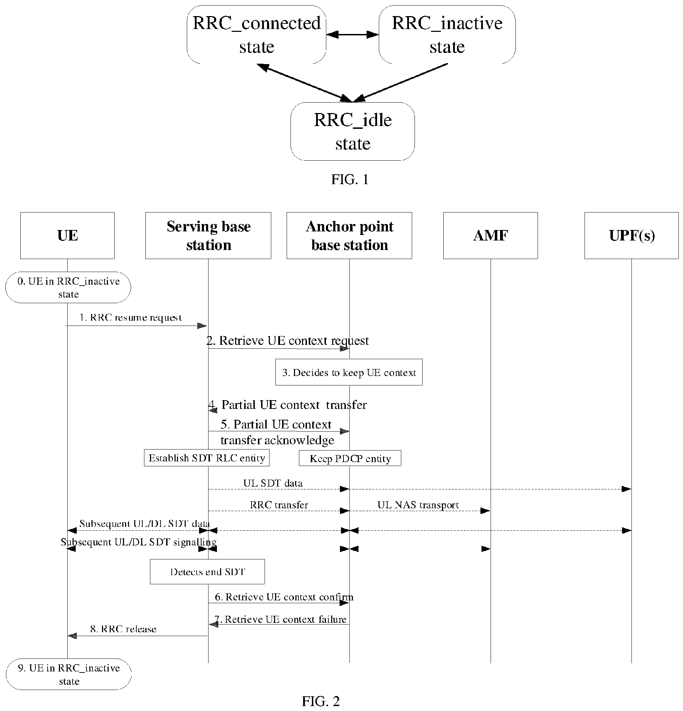

The characteristic of RRC_inactive state is that, from the perspective of the core network, user equipment (UE) is still in the non-access layer state (CM_connected state), and both the radio access network (RAN) and the UE retain the context of the access layer of the UE, but the air interface resources of the UE are released, which is similar to the RRC_idle state. The UE may perform cell re-selection, receive broadcasts of system information and paging messages in RRC_inactive state, and the difference is that the UE may quickly recover to RRC_connected state. The transition relationship between RRC states is shown in FIG. 1.

The function description of RRC_idle state is as follows:
public land mobile network (PLMN) selection;
broadcast of system information;
cell re-selection mobility;
paging for mobile terminated data is initiated by 5G core (5GC);
paging for mobile terminated data area is managed by 5GC; and
discontinuous reception (DRX) for core network (CN) paging configured by non-access stratum (NAS).

The function description of RRC_inactive state is as follows:
broadcast of system information;
cell re-selection mobility;
paging is initiated by next generation RAN (NG-RAN) (RAN paging);
RAN-based notification area (RNA) is managed by NG- RAN;
DRX for RAN paging configured by NG-RAN;
5GC - NG-RAN connection (both control/user(C/U)-planes) is established for UE;
the UE access stratum (AS) context is stored in NG-RAN and the UE; and
NG-RAN knows the RNA which the UE belongs to.

The function description of RRC_connected state is as follows:
5GC - NG-RAN connection (both C/U-planes) is established for UE;
the UE AS context is stored in NG-RAN and the UE;
NG-RAN knows the cell which the UE belongs to;
transfer of unicast data to/from the UE; and
network controlled mobility including measurements.

In RRC_inactive state, small data transmission (SDT) includes two types of procedures of SDT without anchor point relocation and SDT with anchor point relocation.

As shown in FIG. 2, the procedure of SDT without anchor point relocation is as follows.
1. The UE in RRC_inactive state initiates an RRC resume (RRCResume) request procedure and carries uplink (UL) SDT data or signaling simultaneously.
2. The serving base station (if different from the anchor point base station) initiates a context obtaining procedure on Xn interface to the anchor point base station, which includes an arrival indicator of UL SDT and associated assistance information.
3. The anchor point base station decides not to perform anchor point relocation.
4. The anchor point base station provides partial UE context to the serving base station, including SDT-associated radio link control (RLC) configuration.
5. The serving base station acknowledges the reception of partial context and provides an associated downlink (DL) transport network layer (TNL) address (DL TNL address) in the response message. The UE context remains at the anchor point, and the serving base station side only establishes the RLC entity associated with SDT bearer. A user plane general packet radio service (GPRS) tunneling protocol (GTP-U) tunnel is established for each SDT data radio bearer (DRB), and UL SDT data (if any) is transmitted to the anchor point base station through the tunnel. After processing, the UL SDT data is transmitted to the core network. UL/DL SDT signaling (if any) is transmitted between the anchor point and the serving base station through RRC transfer messages.
6. In case that the serving base station determines that the SDT is ended, the serving base station transmits a retrieve UE context confirm message to the anchor point base station, indicating whether ending normally or due to radio link issues.
7. After receiving the retrieve UE context confirm message, if the anchor point base station decides to end SDT, the anchor point base station feeds back a retrieve UE context failure message, which includes an RRC release message for the UE.
8. The serving base station transmits the RRC release message to the UE.
   If the anchor point base station detects the arrival of DL non-SDT data or signaling, or receives assistance information from the UE indicating the arrival of UL non-SDT data, the anchor point base station returns the UE to RRC_inactive state through the RRC release message.
9. After receiving the RRC release message, the UE returns to the RRC_inactive or RRC_idle state, depending on whether the RRC release message includes a suspend configuration (Suspend Config).

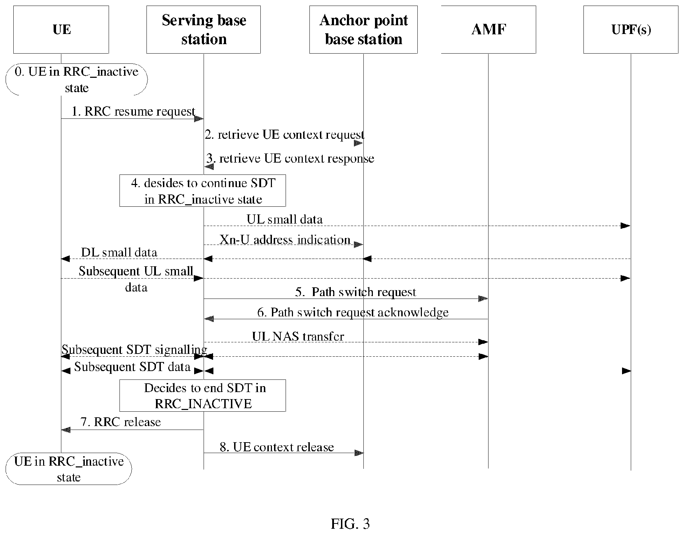

As shown in FIG. 3, the procedure of SDT with anchor point relocation is as follows.
1. The UE in RRC_inactive state initiates an RRCResume request procedure and carries UL SDT data or signaling simultaneously.
2. The serving base station (if different from the anchor point base station) initiates a context obtaining procedure on Xn interface to the anchor point base station, which includes an arrival indicator of UL SDT and associated assistance information.
3. The anchor point base station decides to perform anchor point relocation and reply with a retrieve UE context response message to the serving base station.

If the serving base station has buffered UL SDT data, after receiving the context transferred by the anchor point, the serving base station may perform corresponding processing and transmit to a user plane function (UPF).

4-6. The serving base station decides to keep the UE in RRC_inactive state for SDT. To ensure lossless downlink data, the serving base station should provide a forwarding address to the anchor point base station through an Xn-U address indication message. The serving base station initiates the path switch on the NG interface, and any buffered UL NAS protocol data unit (PDU) (if any) may be transported to an access and mobility management function (AMF) after the path switch is completed. After the path switch is completed, subsequent SDT uplink and downlink data are exchanged between the new serving base station (i.e., the new anchor point base station) and the core network.

7. After the SDT data transmission is completed, the serving base station (the new anchor point base station) generates an RRCRelease message carrying the Suspend Config and transmits the RRC release message to the UE to keep the UE in RRC_inactive state.

Note: for DL non-SDT data or signaling arrival during SDT, or UE notifying UL non-SDT arrival through assistance information, the serving base station (new anchor point base station) may directly resume the UE to RRC_connected state through RRCResume message for subsequent transmission.

8. The serving base station transmits a UE context release message to the old anchor point base station, indicating to release the UE-associated context. This message may be initiated after step 6.

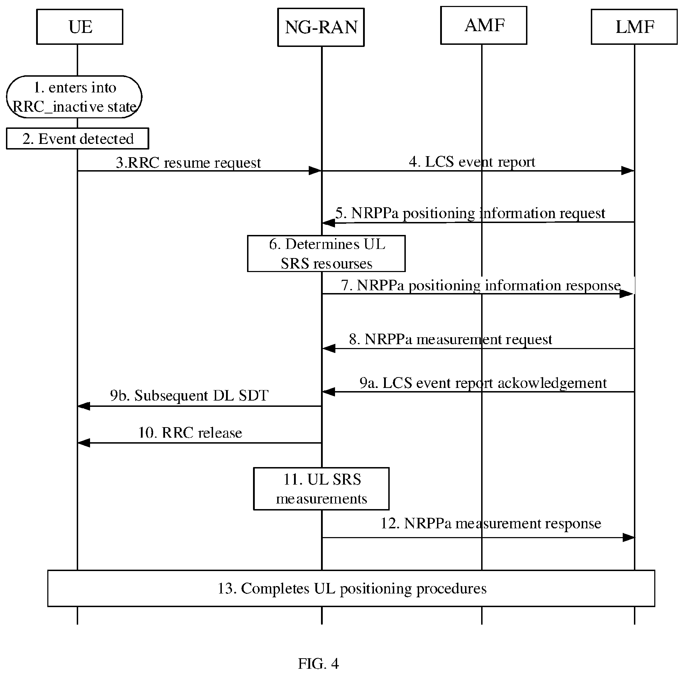

As shown in FIG. 4, for the deferred 5GC mobile terminated location request (5GC-MT-LR) service, the uplink positioning procedure based on SDT in RRC_inactive state is as follows.
1. UE enters RRC_inactive state.
2. UE detects triggered or periodic events.
3. When an event is detected, the UE transmits an RRC UL information transfer message to the NG-RAN, which includes a UL NAS transport message and an RRC resume request with SDT; the serving base station for the UE may be the same as or different from the base station that releases the UE to RRC_inactive state.
4. NG-RAN transmits a location services (LCS) event report to an AMF; if the anchor point base station is not changed, the serving base station forwards the LCS event report to the anchor point base station through the XnAP message (RRC transfer). Subsequent DL NAS messages (e.g.: LCS event report acknowledgment) is also forwarded by the anchor point base station to the serving base station through the XnAP message (RRC transfer).
5. AMF transmits NRPPa positioning information request message to NG-RAN, requesting UL-SRS resources.
6. NG-RAN determines UL-SRS resources.
7. NG-RAN provides UL-SRS resource configuration to LMF.
8. LMF transmits UL-SRS resource configuration to a group of base stations (associated base stations).
9a. LMF transmits LCS event report acknowledgment to NG-RAN.
9b. NG-RAN transmits the LCS event report acknowledgment to UE through DL SDT.
10. NG-RAN transmits RRCRelease message to keep UE in RRC_inactive state and carry UL-SRS configuration.
11. UE transmits UL-SRS signals, which are received and measured by associated base stations.
12. Associated base stations provide measurement results to LMF.
13. The UL positioning procedure is completed.

In case that the UE is in RRC_inactive state and within the coverage range of a non-anchor point base station (serving base station), if the LMF triggers the UL positioning procedure, since the LMF and AMF do not know that the UE is in RRC_inactive state or the serving base station to which the UE belongs, the associated UL positioning procedure does not involve the behavior between base stations. Therefore, the LMF only transmits the SRS resource allocation request to the anchor point base station. After the anchor point base station receives the SRS resource allocation request, how to handle the request, how to allocate SRS resources, and how to feedback response messages to the LMF are all unknown. Therefore, the anchor point base station cannot allocate SRS resources, which results in uplink positioning failure.

Based on the above technical problems, embodiments of the present application provide methods for information transmission. After receiving the SRS resource allocation request transmitted from the LMF, the anchor point base station requests SRS resource allocation from the serving base station and performs anchor point relocation, which realizes uplink positioning associated NRPPa and air interface procedures.

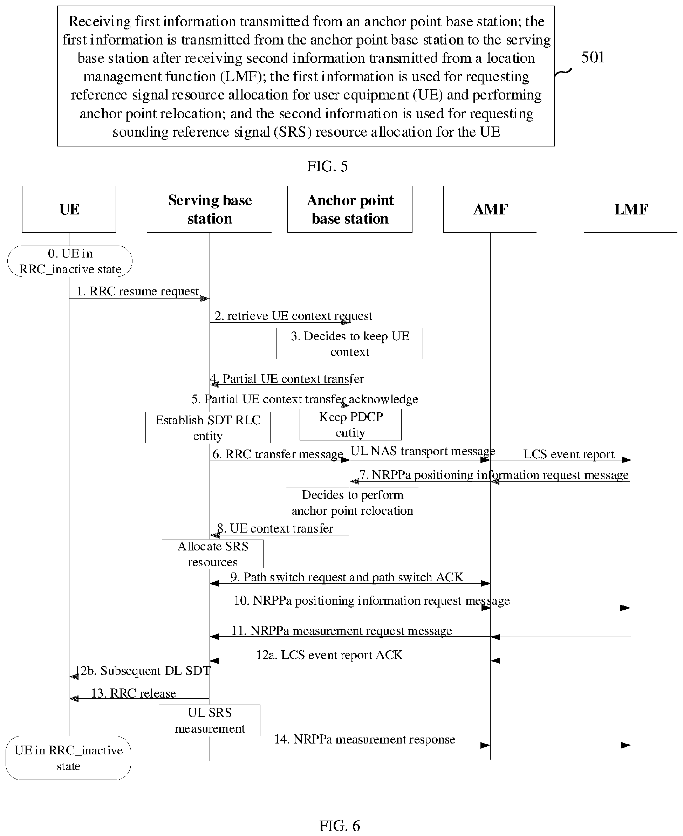

FIG. 5 is a first schematic flowchart of a method for information transmission according to an embodiment of the present application. As shown in FIG. 5, embodiments of the present application provide a method for information transmission, which may be performed by a serving base station. The method includes:
step 501: receiving first information transmitted from an anchor point base station; the first information is transmitted from the anchor point base station to the serving base station after receiving second information transmitted from a location management function (LMF); the first information is used for requesting reference signal resource allocation for user equipment (UE) and performing anchor point relocation; and the second information is used for requesting sounding reference signal (SRS) resource allocation for the UE.

In an embodiment, the SDT procedure triggered by the UE in RRC_inactive state in the non-anchor point base station is used to transmit a positioning event report. The anchor base station may use the way of SDT without anchor relocation for SDT.

For UL positioning or UL and DL combined positioning, the anchor point base station receives the second information transmitted from the LMF, and the second information is used for requesting SRS resource allocation for UE.

The second information may be carried through the NRPPa positioning information request message.

After receiving the second information transmitted from the LMF, the anchor point base station determines that anchor point relocation is required. The anchor point base station transmits the first information to the serving base station, and the first information is used for requesting reference signal resource allocation for UE and performing anchor point relocation

In an embodiment, the first information may be carried through existing Xn interface messages, such as through retrieve UE context response messages.

Alternatively, the existing Xn interface message may also not be reused to carry the first information to avoid affecting the existing Xn interface. The first information may be carried through dedicated interface messages between base stations, such as Xn Application Protocol (XnAP) messages or NRPPa transmission messages.

In an embodiment, the first information may also be carried simultaneously through existing Xn interface messages and dedicated interface messages between base stations.

In an embodiment, the first information includes one or more types of the following information:
context information of the UE;
SRS characteristic information; or
routing information of the LMF.

In an embodiment, after receiving the NRPPa positioning information request message transmitted from the LMF, the anchor point base station may first parse out the SRS characteristic information and/or routing information of the LMF, and transmit one or more types of the context information of the UE, SRS characteristic information, and routing information of the LMF to the serving base station through the Xn interface message in form of an information element (IE).

In addition, after receiving the NRPPa positioning information request message transmitted from the LMF, the anchor point base station may also transmit the NRPPa positioning information request message as a whole to the serving base station through the Xn interface message. For example, the NRPPa positioning information request message may be transmitted to the serving base station along with the context information of the UE through the retrieve UE context response message; the NRPPa positioning information request message and context information of the UE may also be transmitted separately to the serving base station.

In an embodiment, after receiving the first information transmitted from the anchor point base station, the serving base station initiates a path switch procedure based on the received complete context information of the UE, and becomes a new anchor point base station.

In an embodiment, the serving base station transmits a path switch request message to the AMF. After receiving the path switch request message, if the AMF performs anchor point relocation, the AMF replies a path switch response message to the serving base station. After receiving the path switch response message, the serving base station becomes the new anchor point base station.

In addition, the serving base station allocates reference signal resources based on SRS characteristic information. In case that the serving base station receives a complete NRPPa positioning information request message, the serving base station first parses the SRS characteristic information from the NRPPa positioning information request message, and then allocates reference signal resources based on the SRS characteristic information.

After completing the allocation of reference signal resources, the serving base station transmits a positioning information response message to the LMF, and the positioning information response message includes the information of the reference signal resources allocated by the serving base station.

In an embodiment, the serving base station may first transmit the positioning information response message to the AMF based on the routing information of the LMF, and then the positioning information response message is forwarded to the corresponding LMF by the AMF.

In an embodiment, after receiving the positioning information response message transmitted from the serving base station, the LMF transmits a positioning measurement request message to the serving base station (new anchor point base station), requesting the serving base station to perform SRS measurement. For example, the LMF initiates an NRPPa measurement request to the serving base station.

After receiving the positioning measurement request message transmitted from the LMF, the serving base station transmits an RRC release message to the UE, which includes information of the reference signal resources allocated by the serving base station.

UE transmits reference signals based on the information of the reference signal resources allocated by the serving base station.

The serving base station receives the reference signal transmitted from the UE and measures the reference signal to obtain the measurement result.

Finally, the serving base station transmits the measurement result to the LMF, and the LMF calculates the location of the UE based on the measurement result reported from the base station for uplink positioning.

In the method for information transmission provided by the embodiments of the present application, after receiving the SRS resource allocation request transmitted from the LMF, the anchor point base station requests SRS resource allocation from the serving base station and performs anchor point relocation, which realizes uplink positioning associated NRPPa and air interface procedures.

Below is a specific example to further explain the method in the above embodiments.

FIG. 6 is a schematic flowchart of uplink positioning with anchor point relocation according to an embodiment of the present application. As shown in FIG. 6, the uplink positioning procedure with anchor point relocation may include the following steps.
1. UE in RRC_inactive state initiates an event report for deferred MT-LR service using SDT. For example, UE transmits an RRC resume request message and UL SDT signaling to the serving base station.
2. The serving base station for UE initiating RRC resume request is a non-anchor point base station. The non-anchor point base station finds the anchor point base station based on the inactive radio network temporary identity (I-RNTI) in the RRC resume request message, initiates a retrieve UE context request procedure to the anchor point base station, and indicates that the current transmission is SDT.
3. The anchor point base station decides not to perform anchor point relocation to complete the SDT procedure.
4. The anchor point base station provides partial UE context to the serving base station, including RLC configuration associated with SDT.
5. The serving base station acknowledges the reception of partial context. The complete UE context is still retained at the anchor point, and the serving base station side only establishes RLC entities associated with SDT bearer (SDT signaling radio bearer, SRB, and DRB). UL/DL SDT signaling (if any) is transmitted between the anchor point and the serving base station through RRC transfer messages.
6. The non-anchor point base station processes the SDT signaling (including the event report) received in step 1 with corresponding RLC, and then it is transmited to the anchor point base station through RRC transfer message. The anchor point base station further completes the processing of packet data convergence protocol (PDCP) and RRC, and transmits the event report to LMF through AMF.
7. After receiving the event report, LMF triggers a positioning information request message associated with UL positioning, requesting allocation of SRS resources, the positioning information request message is transmitted to the anchor point base station.
8. To complete the subsequent SRS resource allocation and NRPPa associated procedures, the anchor point base station decides to perform UE context transfer. The anchor point base station may provide complete context information of the UE to the non-anchor point base station through retrieve UE context response message, which may also include an NRPPa positioning information request message or SRS characteristic information, as well as routing information corresponding to LMF, such as a routing ID.
9. After receiving the complete UE context, the non-anchor point base station initiates a path switch with the core network. The non-anchor point base station becomes an anchor point base station.
10. The serving base station allocates SRS resources based on the NRPPa positioning information request message or the SRS characteristic information therein, and includes the allocated SRS configuration (Config) in the NRPPa positioning information response message. Based on indication in the routing ID, the NRPPa positioning information response message is forwarded from the AMF to the corresponding LMF.
11. LMF initiates an NRPPa measurement request to the new anchor point base station, requesting the new anchor point base station to perform SRS measurements.
12a. LMF transmits an LCS event report ACK message to the new anchor point base station.
12b. The new anchor point base station encapsulates the LCS event report ACK message in an RRC message and transmits it to the UE.
13. When the new anchor point base station generates the RRCRelease message and transmits it to the UE, the RRCRelease message includes the allocated SRS Config.
14. UE transmits SRS based on configuration, the base station performs SRS measurement, and reports the measurement result to LMF.

In the method for information transmission provided by the present application, when UL positioning associated requests arrive at the anchor point base station, the anchor point base station transmits UE context relocation and NRPPa associated information, allowing the non-anchor point base station to complete the allocation of associated SRS resources and directly perform NRPPa response and air interface SRS configuration. The existing Xn interface context may be reused as much as possible to obtain response messages to transfer the UE context and transmit the NRPPa associated information, which greatly reduces the complexity of transmitting SRS associated configurations on Xn interface.

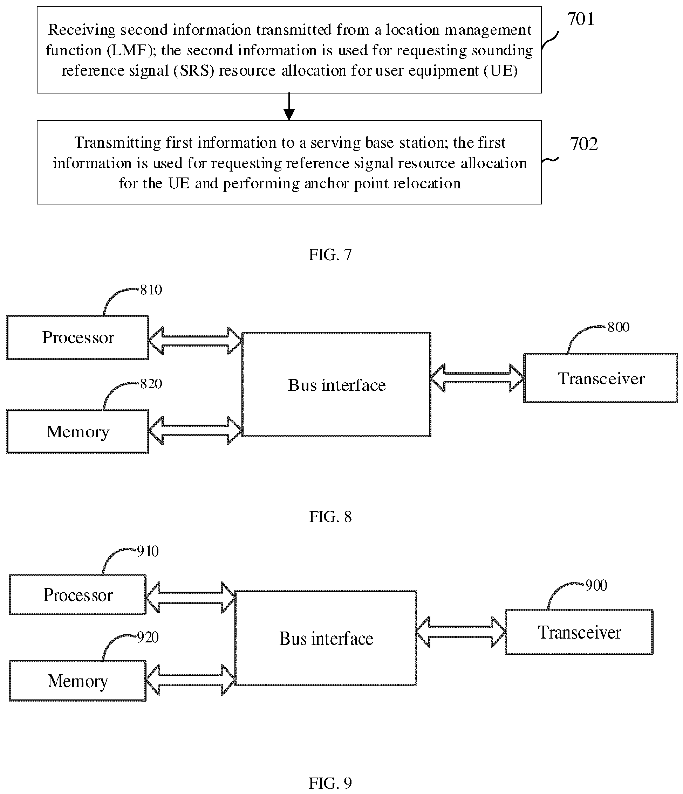

FIG. 7 is a second schematic flowchart of a method for information transmission according to an embodiment of the present application. As shown in FIG. 7, embodiments of the present application provide a method for information transmission, which may be performed by an anchor point base station. The method includes:
Step 701: receiving second information transmitted from a location management function (LMF); the second information is used for requesting sounding reference signal (SRS) resource allocation for user equipment (UE); and
Step 702: transmitting first information to a serving base station; the first information is used for requesting reference signal resource allocation for the UE and performing anchor point relocation.

In an embodiment, the first information includes one or more types of the following information:
context information of the UE;
SRS characteristic information; or
routing information of the LMF.

In an embodiment, the method for information transmission provided by the embodiments of the present application may refer to the method embodiments for information transmission embodiment with the serving base station as the executing subject, and may achieve the same technical effect. Therefore, the same parts and beneficial effects as the corresponding method embodiments in this embodiment are not specifically described here.

FIG. 8 is a schematic structural diagram of a serving base station according to an embodiment of the present application. As shown in FIG. 8, the serving base station includes a memory 820, a transceiver 800, and a processor 810, where
the memory 820 is used for storing a computer program; the transceiver 800 is used for receiving and transmitting data under control of the processor 810; the processor 810 is used for reading the computer program in the memory 820 and performing the following operations:
receiving first information transmitted from an anchor point base station; the first information is transmitted from the anchor point base station to the serving base station after receiving second information transmitted from a location management function (LMF); the first information is used for requesting reference signal resource allocation for user equipment (UE) and performing anchor point relocation; and the second information is used for requesting sounding reference signal (SRS) resource allocation for the UE.

In an embodiment, transceiver 800 is used for receiving and transmitting data under control of the processor 810.

In FIG. 8, a bus architecture may include any quantity of interconnected buses and bridges, which are linked together through various circuits of one or more processors represented by the processor 810 and one or more memories represented by the memory 820. The bus architecture may also link together various other circuits, such as peripherals, voltage regulators, and power management circuits, which are well known in the art, and therefore will not be further described in the present application. The bus interface provides an interface. The transceiver 800 may be multiple elements, i.e., including a transmitter and a receiver, units for providing communication with various other devices over transmission media including wireless channels, wired channels, fiber optic cables, and the like. The processor 810 is responsible for managing the bus architecture and general processing, and the memory 820 may store data used by the processor 810 when performing operations.

The processor 810 may be a central processing unit (CPU), an application specific integrated circuit (ASIC), a field-programmable gate array (FPGA), or a complex programmable logic device (CPLD), the processor can also use a multi-core architecture.

In some embodiments, the first information includes one or more types of the following information:
context information of the UE;
SRS characteristic information; or
routing information of the LMF.

In some embodiments, after receiving the first information transmitted from the anchor point base station, the operations further include:
allocating reference signal resources; and
transmitting a positioning information response message to the LMF; the positioning information response message includes information of the reference signal resources allocated by the serving base station.

In some embodiments, after transmitting the positioning information response message to the LMF, the operations further include:
receiving a positioning measurement request message transmitted from the LMF;
transmitting a radio resource control (RRC) release message to the UE; the RRC release message includes the information of the reference signal resources allocated by the serving base station;
receiving a reference signal transmitted from the UE, and measuring the reference signal to obtain a measurement result; the reference signal is transmitted from the UE based on the reference signal resources allocated by the serving base station; and
transmitting the measurement result to the LMF.

In some embodiments, transmitting the positioning information response message to the LMF includes:
transmitting the positioning information response message to the LMF based on the routing information of the LMF.

In some embodiments, after receiving the first information transmitted from the anchor point base station, the operations further include:
transmitting a path switch request message to an access and mobility management function (AMF); and
receiving a path switch acknowledge message transmitted from the AMF.

In an embodiment, the above-mentioned serving base station provided by the embodiments of the present application may perform all the method steps implemented by the method embodiments with the serving base station as the executing subject, and may achieve the same technical effects. Therefore, the same parts and beneficial effects as the method embodiments in this embodiment are not specifically described here.

FIG. 9 is a schematic structural diagram of an anchor point base station according to an embodiment of the present application. As shown in FIG. 9, the anchor point base station includes a memory 920, a transceiver 900, and a processor 910, where
the memory 920 is used for storing a computer program; the transceiver 900 is used for receiving and transmitting data under control of the processor 910; the processor 910 is used for reading the computer program in the memory 920 and performing the following operations:
receiving second information transmitted from a location management function (LMF); the second information is used for requesting sounding reference signal (SRS) resource allocation for user equipment (UE); and
transmitting first information to a serving base station; the first information is used for requesting reference signal resource allocation for the UE and performing anchor point relocation.

In an embodiment, transceiver 900 is used for receiving and transmitting data under control of the processor 910.

In FIG. 9, a bus architecture may include any quantity of interconnected buses and bridges, which are linked together through various circuits of one or more processors represented by the processor 910 and one or more memories represented by the memory 920. The bus architecture may also link together various other circuits, such as peripherals, voltage regulators, and power management circuits, which are well known in the art, and therefore will not be further described in the present application. The bus interface provides an interface. The transceiver 900 may be multiple elements, i.e., including a transmitter and a receiver, units for providing communication with various other devices over transmission media including wireless channels, wired channels, fiber optic cables, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), the processor can also use a multi-core architecture.

In some embodiments, the first information includes one or more types of the following information:
context information of the UE;
SRS characteristic information; or
routing information of the LMF.

In an embodiment, the anchor point base station provided by the embodiments of the present application may perform all the method steps implemented by the method embodiments with the anchor point base station as the executing subject, and may achieve the same technical effect. Therefore, the same parts and beneficial effects as the method embodiments in this embodiment are not specifically described here.

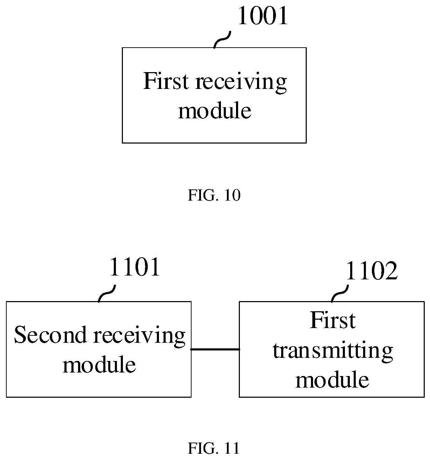

FIG. 10 is a first schematic structural diagram of an apparatus for information transmission according to an embodiment of the present application. As shown in FIG. 10, embodiments of the present application provide an apparatus for information transmission, including a first receiving module 1001, where
the first receiving module 1001 is used for receiving first information transmitted from an anchor point base station; the first information is transmitted from the anchor point base station to a serving base station after receiving second information transmitted from a location management function (LMF); the first information is used for requesting reference signal resource allocation for user equipment (UE) and performing anchor point relocation; and the second information is used for requesting sounding reference signal (SRS) resource allocation for the UE.

In some embodiments, the first information includes one or more types of the following information:
context information of the UE;
SRS characteristic information; or
routing information of the LMF.

In some embodiments, the apparatus further includes an allocating module and a second transmitting module;
the allocating module is used for allocating reference signal resources; and
the second transmitting module is used for transmitting a positioning information response message to the LMF; the positioning information response message includes information of the reference signal resources allocated by the serving base station.

In some embodiments, the apparatus further includes a third receiving module, a third transmitting module, a fourth receiving module, and a fourth transmitting module;
the third receiving module is used for receiving a positioning measurement request message transmitted from the LMF;
the third transmitting module is used for transmitting a radio resource control (RRC) release message to the UE; the RRC release message includes the information of the reference signal resources allocated by the serving base station;
the fourth receiving module is used for receiving a reference signal transmitted from the UE, and measuring the reference signal to obtain a measurement result; the reference signal is transmitted from the UE based on the reference signal resources allocated by the serving base station; and
the fourth transmitting module is used for transmitting the measurement result to the LMF.

In some embodiments, the second transmitting module is used for transmitting the positioning information response message to the LMF based on the routing information of the LMF.

In some embodiments, the apparatus further includes a fifth transmitting module and a fifth receiving module;
the fifth transmitting module is used for transmitting a path switch request message to an access and mobility management function (AMF); and
the fifth receiving module is used for receiving a path switch acknowledge message transmitted from the AMF.

In an embodiment, the apparatus for information transmission provided by the embodiments of the present application may perform all the method steps implemented by the method embodiments with the serving base station as the executing subject, and may achieve the same technical effects. Therefore, the same parts and beneficial effects as the method embodiments in this embodiment are not specifically described here.

FIG. 11 is the second schematic diagram of the structure of an apparatus for information transmission provided by the embodiments of the present application. As shown in FIG. 11, embodiments of the present application provide an apparatus for information transmission including a second receiving module 1101 and a first transmitting module 1102, where
the second receiving module 1101 is used for receiving second information transmitted from a location management function (LMF); and the first receiving module 1102 is used for transmitting first information to a serving base station; the first information is used for requesting reference signal resource allocation for the UE and performing anchor point relocation.

In some embodiments, the first information includes one or more types of the following information:
context information of the UE;
SRS characteristic information; or
routing information of the LMF.

In an embodiment, the apparatus for information transmission provided by the embodiments of the present application may perform all the method steps implemented in the method embodiments with the anchor point base station as the executing subject, and may achieve the same technical effect. Therefore, the same parts and beneficial effects as the method embodiments in this embodiment are not specifically described here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

In some embodiments, a computer-readable storage medium is also provided, where the computer-readable storage medium stores a computer program for causing a computer to perform the method for information transmissions provided by the above method embodiments.

In an embodiment, the computer-readable storage medium provided by the embodiments of the present application may perform all the method steps implemented in the above method embodiments and achieve the same technical effects. Therefore, the same parts and beneficial effects as the method embodiments in this embodiment are not specifically described here.

It should be noted that the computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in the embodiments of the present application are used to distinguish similar objects and are not used to describe a specific order or sequence. It is understood that the terms used in this way may be interchanged in appropriate circumstances, so that the embodiments of the present application may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a user equipment and a network side device. The system may also include a core network part, such as an evolved packet system (EPS), a 5G system (5GS), and the like.

The terminal device in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be called as user equipment (UE). A wireless terminal device may communicate with one or more core networks (CN) via a radio access network (RAN), and the wireless terminal device may be a mobile terminal device, such as a mobile phone (or "cellular" phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include a plurality of cells providing services for the terminal. Depending on the specific application, the base station may also be called an access point, or may be a device in the access network that communicates with wireless terminal through one or more sectors on the air interface, or other names. Network device may be used to exchange received air frames with internet protocol (IP) packets, and act as a router between wireless terminal device and the rest of the access network, and the rest of the access network may include an internet protocol (IP) communication network. The network devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The phrase "determine B based on A" in the present application means that the factor A should be considered when determining B. Not limited to "determining B based solely on A", it should also include: "determine B based on A and C", "determine B based on A, C, and E", "determine C based on A, and further determine B based on C", etc. In addition, it may also include using A as a condition for determining B, for example, "in case that A satisfies the first condition, use the first method to determine B"; for example, "in case that A satisfies the second condition, determine B" and so on; for example, "in case that A satisfies the third condition, determine B based on the first parameter", etc. A may also be used as a condition for determining B, such as "in case that A satisfies the first condition, use the first method to determine C, and further determine B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and quantity of antenna combinations, MIMO transmission may be 2D-MIMO, 3D-MIMO, FD-MIMO, or massive-MIMO, and may also be diversity transmission, precoding transmission, or beamforming transmission.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, devices (systems), and computer program products according to embodiments of the present application. It is understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

To those skilled in the art, various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for information transmission, performed by a serving base station, comprising:
receiving first information transmitted from an anchor point base station; the first information is transmitted from the anchor point base station to the serving base station after the anchor point base station receives second information transmitted from a location management function (LMF); the first information is used for requesting reference signal resource allocation for user equipment (UE) and performing anchor point relocation; and the second information is used for requesting sounding reference signal (SRS) resource allocation for the UE.

2. The method for information transmission of claim 1, wherein the first information comprises one or more types of the following information:
context information of the UE;
SRS characteristic information; or
routing information of the LMF.

3. The method for information transmission of claim 2, wherein after receiving the first information transmitted from the anchor point base station, the method further comprises:
allocating reference signal resources; and
transmitting a positioning information response message to the LMF; the positioning information response message comprises information of the reference signal resources allocated by the serving base station.

4. The method for information transmission of claim 3, wherein after transmitting the positioning information response message to the LMF, the method further comprises:
receiving a positioning measurement request message transmitted from the LMF;
transmitting a radio resource control (RRC) release message to the UE; the RRC release message comprises the information of the reference signal resources allocated by the serving base station;
receiving a reference signal transmitted from the UE, and measuring the reference signal to obtain a measurement result; the reference signal is transmitted from the UE based on the reference signal resources allocated by the serving base station; and
transmitting the measurement result to the LMF.

5. The method for information transmission of claim 3, wherein transmitting the positioning information response message to the LMF comprises:
transmitting the positioning information response message to the LMF based on the routing information of the LMF.

6. The method for information transmission of claim 2, wherein after receiving the first information transmitted from the anchor point base station, the method further comprises:
transmitting a path switch request message to an access and mobility management function (AMF); and
receiving a path switch acknowledge message transmitted from the AMF.

7. A method for information transmission, performed by an anchor point base station, comprising:
receiving second information transmitted from a location management function (LMF); the second information is used for requesting sounding reference signal (SRS) resource allocation for user equipment (UE); and
transmitting first information to a serving base station; the first information is used for requesting reference signal resource allocation for the UE and performing anchor point relocation.

8. The method for information transmission of claim 7, wherein the first information comprises one or more types of the following information:
context information of the UE;
SRS characteristic information; or
routing information of the LMF.

9. A serving base station, comprising a memory, a transceiver, and a processor, wherein
the memory is used for storing a computer program; the transceiver is used for receiving and transmitting data under control of the processor; and the processor is used for reading the computer program in the memory and performing the following operations:
receiving first information transmitted from an anchor point base station; the first information is transmitted from the anchor point base station to the serving base station after the anchor point base station receives second information transmitted from a location management function (LMF); the first information is used for requesting reference signal resource allocation for user equipment (UE) and performing anchor point relocation; and the second information is used for requesting sounding reference signal (SRS) resource allocation for the UE.

10. The serving base station of claim 9, wherein the first information comprises one or more types of the following information:
context information of the UE;
SRS characteristic information; or
routing information of the LMF.

11. The serving base station of claim 10, wherein after receiving the first information transmitted from the anchor point base station, the operations further comprise:
allocating reference signal resources; and
transmitting a positioning information response message to the LMF; the positioning information response message comprises information of the reference signal resources allocated by the serving base station.

12. The serving base station of claim 11, wherein after transmitting the positioning information response message to the LMF, the operations further comprise:
receiving a positioning measurement request message transmitted from the LMF;
transmitting a radio resource control (RRC) release message to the UE; the RRC release message comprises the information of the reference signal resources allocated by the serving base station;
receiving a reference signal transmitted from the UE, and measuring the reference signal to obtain a measurement result; the reference signal is transmitted from the UE based on the reference signal resources allocated by the serving base station; and
transmitting the measurement result to the LMF.

13. The serving base station of claim 11, wherein transmitting the positioning information response message to the LMF comprises:
transmitting the positioning information response message to the LMF based on the routing information of the LMF.

14. The serving base station of claim 10, wherein after receiving the first information transmitted from the anchor point base station, the operations further comprise:
transmitting a path switch request message to an access and mobility management function (AMF); and
receiving a path switch acknowledge message transmitted from the AMF.

15. An anchor point base station, comprising a memory, a transceiver, and a processor, wherein
the memory is used for storing a computer program; the transceiver is used for receiving and transmitting data under control of the processor; and the processor is used for reading the computer program in the memory and performing the following operations:
receiving second information transmitted from a location management function (LMF); the second information is used for requesting sounding reference signal (SRS) resource allocation for user equipment (UE); and
transmitting first information to a serving base station; the first information is used for requesting reference signal resource allocation for the UE and performing anchor point relocation.

16. The anchor point base station of claim 15, wherein the first information comprises one or more types of the following information:
context information of the UE;
SRS characteristic information; or
routing information of the LMF.

17. An apparatus for information transmission, comprising:
a first receiving module, used for receiving first information transmitted from an anchor point base station; the first information is transmitted from the anchor point base station to a serving base station after the anchor point base station receives second information transmitted from a location management function (LMF); the first information is used for requesting reference signal resource allocation for user equipment (UE) and performing anchor point relocation; and the second information is used for requesting sounding reference signal (SRS) resource allocation for the UE.

18. The apparatus for information transmission of claim 17, wherein the first information comprises one or more types of the following information:
context information of the UE;
SRS characteristic information; or
routing information of the LMF.

19. The apparatus for information transmission of claim 18, wherein the apparatus further comprises an allocating module and a second transmitting module;
the allocating module is used for allocating reference signal resources; and
the second transmitting module is used for transmitting a positioning information response message to the LMF; the positioning information response message comprises information of the reference signal resources allocated by the serving base station.

20. The apparatus for information transmission of claim 19, wherein the apparatus further comprises a third receiving module, a third transmitting module, a fourth receiving module, and a fourth transmitting module;
the third receiving module is used for receiving a positioning measurement request message transmitted from the LMF;
the third transmitting module is used for transmitting a radio resource control (RRC) release message to the UE; the RRC release message comprises the information of the reference signal resources allocated by the serving base station;
the fourth receiving module is used for receiving a reference signal transmitted from the UE, and measuring the reference signal to obtain a measurement result; the reference signal is transmitted from the UE based on the reference signal resources allocated by the serving base station; and
the fourth transmitting module is used for transmitting the measurement result to the LMF.

21. The apparatus for information transmission of claim 19, wherein the second transmitting module is used for transmitting the positioning information response message to the LMF based on the routing information of the LMF.

22. The apparatus for information transmission of claim 18, wherein the apparatus further comprises a fifth transmitting module and a fifth receiving module;
the fifth transmitting module is used for transmitting a path switch request message to an access and mobility management function (AMF); and
the fifth receiving module is used for receiving a path switch acknowledge message transmitted from the AMF.

23. An apparatus for information transmission, comprising:
a second receiving module, used for receiving second information transmitted from a location management function (LMF); the second information is used for requesting sounding reference signal (SRS) resource allocation for user equipment (UE); and
a first transmitting module, used for transmitting first information to a serving base station; the first information is used for requesting reference signal resource allocation for the UE and performing anchor point relocation.

24. The apparatus for information transmission of claim 23, wherein the first information comprises one or more types of the following information:
context information of the UE;
SRS characteristic information; or
routing information of the LMF.

25. A computer-readable storage medium, wherein the computer-readable storage medium stores a computer program for causing a computer to perform the method for information transmission of any of claims 1 to 6.

26. A computer-readable storage medium, wherein the computer-readable storage medium stores a computer program for causing a computer to perform the method for information transmission of any of claims 7 to 8.
